# EUROPÄISCHE PATENTSCHRIFT

(11) **EP 3 929 047 B1**
(45) Veröffentlichungstag und Bekanntmachung des Hinweises auf die Patenterteilung: **22.02.2023**
(21) Anmeldenummer: 21175439.5
(22) Anmeldetag: 21.05.2021
(51) Int. Cl.: B60W 30/09, B60W 30/095, B60W 50/14, B60W 50/08, G08G 1/16, B60T 7/12

(54) **VERFAHREN ZUM BETRIEB EINES FAHRERASSISTENZSYSTEMS FÜR EIN FAHRZEUG UND FAHRERASSISTENZSYSTEM**
METHOD FOR OPERATING A DRIVER ASSISTANCE SYSTEM FOR A VEHICLE AND DRIVER ASSISTANCE SYSTEM
PROCÉDÉ DE FONCTIONNEMENT D'UN SYSTÈME D'AIDE À LA CONDUITE POUR UN VÉHICULE ET SYSTÈME D'AIDE À LA CONDUITE

(30) Priorität: 24.06.2020 DE 102020207820
(43) Veröffentlichungstag der Anmeldung: 29.12.2021
(73) Patentinhaber: Volkswagen Aktiengesellschaft, 38440 Wolfsburg (DE)
(72) Erfinder: Klawitter, Matthias, 38124 Braunschweig (DE)

(56) Entgegenhaltungen:
- WO-A1-2011/075392
- DE-A1-102015 208 570
- US-A1- 2019 256 084

## Beschreibung

Die vorliegende Erfindung betrifft eine Verfahren zum Betrieb eines Fahrerassistenzsystems eines Fahrzeugs, wobei das Fahrerassistenzsystem eingerichtet ist, in Abhängigkeit von einem Gefahrwert und von Auslöseschwellwerten, Eingriffe in die Bewegung des Fahrzeugs automatisch vorzubereiten und auszuführen, wobei zumindest zwei Eingriffsstufen definiert sind, die stärker werdende Eingriffe in die Bewegung des Fahrzeugs vorbereiten oder erzeugen, wobei jeder Eingriffsstufe jeweils ein Auslöseschwellwert zugeordnet wird. Bei dem Verfahren wird das Fahrzeugumfeld erfasst. Ferner wird die Position zumindest eines Objekts im erfassten Fahrzeugumfeld relativ zu der Position des Fahrzeugs bestimmt. Es wird dann geprüft, ob das Objekt eine Gefahr für das Fahrzeug darstellt. Wenn das Objekt eine Gefahr für das Fahrzeug darstellt, wird dieses Objekt als kritisches Objekt klassifiziert und ihm ein bestimmter Gefahrwert zugeordnet. Ferner wird bei dem erfindungsgemäßen Verfahren eine Blickrichtung eines Fahrers des Fahrzeugs erfasst und daraus ein Blickfeld bestimmt. Anhand der Position eines kritischen Objekts wird geprüft, ob sich dieses kritische Objekt außerhalb des Blickfelds des Fahrers befindet. Des Weiteren betrifft die Erfindung ein Fahrerassistenzsystem für ein Fahrzeug. Dieses weist eine Umfelderfassungseinheit zum Erfassen des Fahrzeugumfelds auf. Des Weiteren weist das Fahrerassistenzsystem eine Blickrichtungserfassungseinheit zum Erfassen der Blickrichtung eines Fahrers des Fahrzeugs und zum Bestimmen eines Blickfelds auf. Ferner weist das Fahrerassistenzsystem eine mit der Umfelderfassungseinheit und der Blickrichtungserfassungseinheit gekoppelte Analyseeinheit auf, die eingerichtet ist, die Position zumindest eines Objekts im erfassten Fahrzeugumfeld relativ zu der Position des Fahrzeugs zu bestimmen, zu prüfen, ob das Objekt eine Gefahr für das Fahrzeug darstellt, und, wenn das Objekt eine Gefahr für das Fahrzeug darstellt, dieses Objekt als kritisches Objekt zu klassifizieren und ihm einen bestimmten Gefahrwert zuzuordnen, und anhand der Position eines kritischen Objekts zu prüfen, ob sich dieses kritische Objekt außerhalb des Blickfelds des Fahrers befindet. Des Weiteren weist das Fahrerassistenzsystem eine Steuervorrichtung auf, die eingerichtet ist, in Abhängigkeit von dem Gefahrwert und von Auslöseschwellwerten, Eingriffe in die Bewegung des Fahrzeugs automatisch vorzubereiten und auszuführen, wobei zumindest zwei Eingriffsstufen definiert sind, die stärker werdende Eingriffe in die Bewegung des Fahrzeugs vorbereiten oder erzeugen, wobei jeder Eingriffsstufe jeweils ein Auslöseschwellwert zugeordnet ist.

Aus der DE 10 2017 008 518 A1 ist ein Ve rfahren zum Betrieb eines Fahrerassistenzsystem eines Fahrzeugs bekannt, bei welchem in Abhängigkeit von einer ermittelten Kollisionsgefahr ein Fahrzeugnutzer gewarnt und zur Vermeidung der Kollision automatisch eine Notbremsung eingeleitet wird. Dabei wird die Eingriffsschwelle des Fahrerassistenzsystems in Abhängigkeit von einer erfassten Blickrichtung des Fahrzeugnutzers angepasst. Wenn der Blick des Fahrzeugnutzers nicht auf das Fahrgeschehen vor dem Fahrzeug gerichtet ist, werden die Eingriffsschwellen herabgesetzt, so dass das Fahrerassistenzsystem früher eingreift.

Aus der DE 10 2012 209 147 A1 ist ein Verfahren zur Erhöhung der Sicherheit für den Fahrer eines Motorrades bekannt. Bei dem Verfahren wird die Blickrichtung des Fahrers ermittelt. Ferner wird ermittelt, ob ein Objekt, welches im Fortgang der Bewegung des Motorrads mit diesem kollidieren würde, ermittelt. Anhand der Blickrichtung des Fahrers wird ermittelt, ob sich das Objekt in dessen Blickbereich befindet. Falls dies nicht der Fall ist, wird wenigstens eine fahrerunabhängige Sicherheitsmaßnahme für das Motorrad eingeleitet. Die Blickrichtung des Fahrers wird dabei insbesondere anhand des Helms ermittelt, welchen der Fahrer trägt. Ferner ist aus der DE 10 2015 215 676 A1 ein Sicherheitssystem für ein Fahrzeug bekannt. Bei diesem Sicherheitssystem wird mittels einer Umfeldsensorik erfasst, ob sich verletzliche Verkehrsteilnehmer im Fahrzeugumfeld aufhalten. Ist dies der Fall, wird anhand einer Gesichtserkennung dieses Verkehrsteilnehmers seine Blickrichtung erkannt. Anhand einer weiteren Bilderfassungsvorrichtung wird die Blickrichtung des Fahrers erkannt. Ergibt sich ein gegenseitiger Blickkontakt zwischen dem Fahrer und dem verletzlichen Verkehrsteilnehmer, wird die aktuelle Fahrsituation als unkritisch bewertet. Ergibt sich hingegen nur ein einseitiger Blickkontakt, wird die Fahrsituation als kritisch bewertet, und ergibt sich kein gegenseitiger oder einseitiger Blickkontakt, wird die Fahrsituation als sehr kritisch bewertet. In diesem Fall werden Notfallfunktionen ausgelöst, beispielsweise Warnfunktionen, Notbremsfunktionen oder Ausweichfunktionen.

Ferner ist aus der WO2011075392 A1 ein weiteres System zur Vermeidung von Unfällen in einem Fahrzeug bekannt.

Bei dem Betrieb eines Fahrerassistenzsystems ergibt sich das Problem, dass Eingriffe in die Bewegung des Fahrzeugs erst sehr spät ausgeführt werden und dann sehr stark in die Bewegung des Fahrzeugs eingreifen oder Eingriffe erfolgen, die der Fahrer des Fahrzeugs als nicht notwendig erachtet. Im letzteren Fall wird durch die Eingriffe die Akzeptanz des Fahrerassistenzsystems gesenkt.

Der vorliegenden Erfindung liegt daher die Aufgabe zugrunde, ein Verfahren und ein Fahrerassistenzsystem der eingangs genannten Art bereitzustellen, bei denen die Auslöseschwellwerte für Eingriffe in die Bewegung des Fahrzeugs so gesetzt werden, dass die jeweiligen Eingriffe nur dann erfolgen, wenn sie im Hinblick auf die vorliegende Fahrsituation notwendig sind und den Fahrer beim Führen des Fahrzeugs unterstützen. Dabei sollen insbesondere Eingriffe vermieden werden, welche der Fahrer als störend empfindet, gleichzeitig jedoch unbedingt erforderliche Eingriffe in Abhängigkeit von der Fahrsituation durchgeführt werden.

Erfindungsgemäß wird diese Aufgabe durch ein Verfahren mit den Merkmalen des Anspruchs 1 und ein Fahrerassistenzsystem mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren wird, wenn sich das kritische Objekt außerhalb des Blickfelds des Fahrers befindet, relativ zu Auslöseschwellwerten, bei denen sich das kritische Objekt im Blickfeld des Fahrers befindet, der Auslöseschwellwert für den Eingriff der niedrigeren Eingriffsstufe stärker gesenkt als für den Eingriff der höheren Eingriffsstufe.

Vorteilhafterweise wird bei dem erfindungsgemäßen Verfahren das Fahrerassistenzsystem so adaptiert, dass der Auslöseschwellwert für den Eingriff des Fahrerassistenzsystems gesenkt wird, wenn sich ein kritisches Objekt außerhalb des Blickfelds des Fahrers befindet, so dass der Fahrer früher durch den Eingriff auf das Objekt aufmerksam gemacht wird. Da der Auslöseschwellwert für den Angriff einer niedrigeren Eingriffsstufe stärker gesenkt wird, als für einen Eingriff der höheren Eingriffsstufe, wird der Fahrer insbesondere durch Eingriffe der niedrigeren Eingriffsstufe auf das Objekt aufmerksam gemacht, wenn sich das kritische Objekt außerhalb des Blickfelds der Fahrers befindet. Für Eingriffe der höheren Eingriffsstufe, welche insbesondere stärker in die Bewegung des Fahrzeugs eingreifen, wird der Auslöseschwellwert in geringerem Maße oder überhaupt nicht abgesenkt, so dass solche Eingriffe in geringerem Maße davon beeinflusst werden, dass sich ein kritisches Objekt außerhalb des Blickfelds des Fahrers befindet. Es hat sich herausgestellt, dass hierdurch der Fahrer durch den Eingriff der niedrigeren Eingriffsstufe nur dann auf das kritische Objekt aufmerksam gemacht wird, wenn es notwendig ist, wenn es sich nämlich außerhalb des Blickfelds des Fahrers befindet, gleichzeitig jedoch der Eingriff der höheren Eingriffsstufe, welcher beispielsweise zur Vermeidung einer Kollision unbedingt erforderlich ist, unbeeinflusst oder zumindest weniger beeinflusst davon ist, ob sich das kritische Objekt im Blickfeld des Fahrers befindet. Bei dem erfindungsgemäßen Verfahren werden die Auslöseschwellwerte somit so adaptiert, dass das Fahrerassistenzsystem sanftere Eingriffe, d. h. Eingriffe der niedrigeren Eingriffsstufe, zeitlich früher durchführt, wenn sich das kritische Objekt nicht im Blickfeld des Fahrers befindet. Falls sich das kritische Objekt hingegen im Blickfeld des Fahrers befindet, können Eingriffe zeitlich später erfolgen, da von einer Reaktion des Fahrers auszugehen ist. Diese Reaktion kann dann stärker sein, d. h. zu einer höheren Eingriffsstufe gehören.

Das Fahrerassistenzsystem ist insbesondere so eingerichtet, dass mehrere Eingriffsstufen definiert sind, die stärker werdende Eingriffe in die Bewegung des Fahrzeugs vorbereiten oder erzeugen. Jeder Eingriffsstufe ist dabei ein Auslöseschwellwert zugeordnet, wobei der Auslöseschwellwert umso größer ist, desto höher die Eingriffsstufe ist, d. h. desto stärker der Eingriff ist.

Gemäß einer Ausgestaltung des erfindungsgemäßen Verfahrens bewirkt der Eingriff der niedrigeren Eingriffsstufe eine geringere Bewegungsänderung des Fahrzeugs als der Eingriff der höheren Eingriffsstufe. Der Eingriff der niedrigeren Eingriffsstufe kann beispielsweise ein leichtes Abbremsen des Fahrzeugs oder eine geringe Lenkbewegung sein. Es handelt sich dabei um eine sanfte Reaktion des Fahrerassistenzsystems des Fahrzeugs auf ein als kritisch klassifiziertes Objekt in Umgebung des Fahrzeugs. Eine derartige Reaktion soll insbesondere den Fahrer des Fahrzeugs auf das kritische Objekt aufmerksam machen, welches sich außerhalb seines Blickfeldes befindet.

Bei einer Ausgestaltung des erfindungsgemäßen Verfahrens bleibt der Auslöseschwellwert für den Eingriff der höheren Eingriffsstufe unverändert, wenn sich das kritische Objekt außerhalb des Blickfelds des Fahrers befindet. Bei diesem Eingriff der höheren Eingriffsstufe handelt es sich insbesondere um eine Notfallbremsung. Ein solcher Eingriff der höheren Eingriffsstufe dient unmittelbar der Vermeidung einer Kollision. Dieser Eingriff soll unabhängig davon durchgeführt werden, ob sich das kritische Objekt im Blickfeld des Fahrers oder außerhalb des Blickfelds des Fahrers befindet.

Gemäß einer Weiterbildung des erfindungsgemäßen Verfahrens ist das Fahrerassistenzsystem eingerichtet, in Abhängigkeit von dem Gefahrwert und den Auslöseschwellwerten zumindest eine Warnung auszugeben, der ein Auslöseschwellwert zugeordnet wird. Wenn sich das kritische Objekt außerhalb des Blickfelds des Fahrers befindet, wird relativ zu dem Auslöseschwellwert, bei dem sich das kritische Objekt im Blickfeld des Fahrers befindet, der Auslöseschwellwert für die zumindest eine Warnung gesenkt, so dass die zumindest eine Warnung bei einem niedrigeren Gefahrwert ausgegeben wird. Gemäß dieser Weiterbildung des erfindungsgemäßen Verfahrens wird somit die Warnung früher ausgegeben, wenn sich ein kritisches Objekt außerhalb des Blickfelds des Fahrers befindet.

Gemäß einer weiteren Ausgestaltung des erfindungsgemäßen Verfahrens ist das Fahrerassistenzsystem eingerichtet, zumindest eine Warnung nur dann auszugeben, wenn sich das kritische Objekt außerhalb des Blickfelds des Fahrers befindet. Diese Warnung wird somit nur in diesem Fall ausgegeben, und insbesondere nicht dann, wenn sich das kritische Objekt im Blickfeld des Fahrers befindet. Diese Warnung soll den Fahrer darauf aufmerksam machen, dass sich ein kritisches Objekt außerhalb seines Blickfeldes befindet. Die Warnung kann so ausgestaltet sein, dass die Blickrichtung des Fahrers in Richtung des kritischen Objekts geleitet wird.

Bei der Gefahr für das Fahrzeug handelt es sich insbesondere um eine Gefahr für den Eintritt eines in der Zukunft liegenden Ereignisses. Der Gefahrwert ist in diesem Fall insbesondere umso höher, desto kürzer das Zeitintervall bis zum Eintritt dieses Ereignisses ist. Bei dem erfindungsgemäßen Verfahren ist der Auslöseschwellwert für Eingriffe der höheren Eingriffsstufe höher. Jedoch ist auch der Gefahrwert für eine Gefahrsituation höher, wenn das Zeitintervall bis zum Eintritt des Ereignisses, z. B. einer Kollision des Fahrzeugs mit dem kritischen Objekt, kürzer ist, so dass die Auslöseschwellwerte für Eingriffe höherer Eingriffsstufe dann überschritten werden, wenn das Zeitintervall kürzer wird.

Mit einer Weiterbildung des erfindungsgemäßen Verfahrens ist der Auslöseschwellwert für den Eingriff der niedrigeren Eingriffsstufe so gewählt, dass dieser Eingriff nicht durchgeführt wird, wenn sich das kritische Objekt im Blickfeld des Fahrers befindet. Beispielsweise kann in diesem Fall der Auslöseschwellwert so hoch gewählt werden, dass er vom Gefahrwert nicht überschritten wird, wenn sich das kritische Objekt im Blickfeld des Fahrers befindet. Es kann somit nicht nur Warnungen geben, die nur dann ausgegeben werden, wenn sich das kritische Objekt außerhalb des Blickfelds des Fahrers befindet, sondern auch einen oder mehrere Eingriffe der niedrigeren Energiestufe, die nur in diesem Fall ausgeführt werden.

Gemäß einer Weiterbildung des erfindungsgemäßen Verfahrens wird der Winkel zwischen der Blickrichtung des Fahrers und einem Strahl von den Augen des Fahrers zu dem kritischen Objekt bestimmt. Der Scheitelpunkt dieses Winkels kann dabei bei einem definierten Punkt liegen, der in Abhängigkeit von der Position der beiden Augen des Fahrers bestimmt wird. Er kann jedoch auch bei einem der Augen oder in der Mitte zwischen den Augen liegen. Der Auslöseschwellwert wird dann umso stärker abgesenkt, desto größer dieser Winkel ist. Ist der Winkel größer, ist die Blickrichtung des Fahrers weiter von dem kritischen Objekt abgewendet als bei einem kleineren Winkel. In diesem Fall wird der Fahrer des Fahrzeugs bei einem geringeren Gefahrwert, d. h. insbesondere früher, auf das kritische Objekt durch den Eingriff der niedrigeren Energiestufe aufmerksam gemacht.

Das erfindungsgemäße Fahrerassistenzsystem ist dadurch gekennzeichnet, dass die Analyseeinheit eingerichtet ist, wenn sich das kritische Objekt außerhalb des Blickfelds des Fahrers befindet, relativ zu Auslöseschwellwerten, bei denen sich das kritische Objekt im Blickfeld des Fahrers befindet, den Auslöseschwellwert für den Eingriff der niedrigeren Eingriffsstufe stärker zu senken als für den Eingriff der höheren Eingriffsstufe.

Das erfindungsgemäße Fahrerassistenzsystem ist insbesondere eingerichtet, das vorstehend beschriebene erfindungsgemäße Verfahren auszuführen. Es weist somit dieselben Vorteile wie das erfindungsgemäße Verfahren auf.

Die Erfindung wird nun anhand eines Ausführungsbeispiels mit Bezug zu den Figuren beschrieben.
- Fig. 1: zeigt schematisch den Aufbau des Ausführungsbeispiels des erfindungsgemäßen Fahrerassistenzsystems,
- Fig. 2: veranschaulicht die Blickrichtung und das Blickfeld eines Fahrers des Fahrzeugs und .die Figuren 3 und 4 veranschaulichen die Position eines kritischen Objekts relativ zu dem Blickfeld des Fahrers.

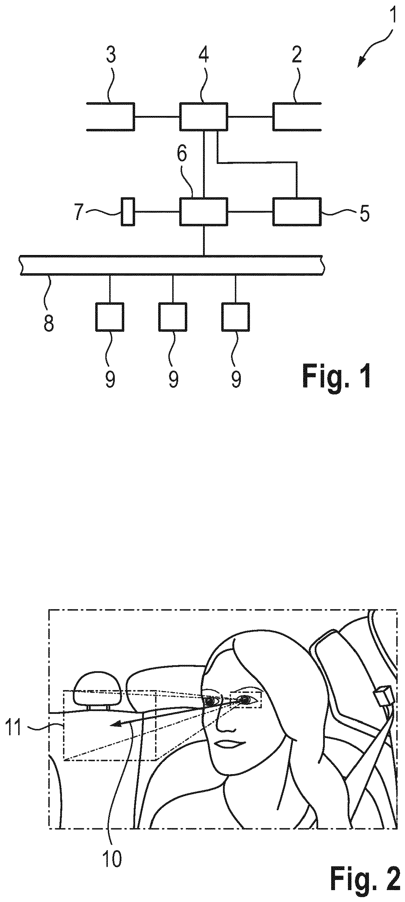

Mit Bezug zur Fig. 1 wird zunächst der Aufbau des erfindungsgemäßen Fahrerassistenzsystems erläutert:
Das Fahrerassistenzsystem 1 weist eine Umfelderfassungseinheit 2 auf. Die Umfelderfassungseinheit 2 umfasst eine Vielzahl von Sensoren, welche fortwährend das Umfeld des Fahrzeugs, insbesondere in Fahrtrichtung, erfassen. Beispielsweise kann die Umfelderfassungseinheit 2 Kameras, LIDAR-Sensoren und/oder Radar-Sensoren umfassen.

Eine solche Umfelderfassungseinheit 2 ist bei herkömmlichen Fahrerassistenzsystemen an sich bekannt.

Des Weiteren umfasst das Fahrerassistenzsystem 1 eine Blickrichtungserfassungseinheit 3. Diese kann beispielsweise eine auf den Kopf des Fahrers des Fahrzeugs gerichtete Kamera mit einer dazugehörigen Auswerteeinheit umfassen. Mittels der Blickrichtungserfassungseinheit 3 kann die Blickrichtung 10 des Fahrers erfasst werden, wie es in Fig. 2 gezeigt ist. Daraus kann ein Blickfeld 11 des Fahrers bestimmt werden. Das Blickfeld 11 ergibt sich dabei aus der Blickrichtung 10, dem Raumwinkel der Wahrnehmung des Fahrers mit seinen Augen und dem Abstand des Blickfelds 11 von dem Fahrer.

Mit der Umfelderfassungseinheit 2 und der Blickrichtungserfassungseinheit 3 ist eine Analyseeinheit 4 verbunden. Anhand der von der Umfelderfassungseinheit 2 übertragenen Daten kann die Analyseeinheit 4 Positionen von Objekten im Fahrzeugumfeld des Fahrzeugs relativ zu der Position des Fahrzeugs bestimmen. Dabei wird nicht nur die relative Lage der Objekte zum Fahrzeug, sondern auch der Abstand der Objekte zum Fahrzeug ermittelt.

Die Analyseeinheit 4 kann ferner prüfen, ob ein Objekt, welches im Fahrzeugumfeld identifiziert worden ist, eine Gefahr für das Fahrzeug darstellt. Hiervon ist umfasst, dass auch das Fahrzeug eine Gefahr für das Objekt darstellen kann. Beispielsweise kann es sich bei dem Objekt um andere Verkehrsteilnehmer, wie andere Fahrzeuge, Radfahrer oder Fußgänger handeln. Ferner kann es sich um unbewegte Objekte der Verkehrsinfrastruktur oder Objekte in der Umgebung der Verkehrsinfrastruktur, wie etwa Bäume, Hindernisse oder beliebige Gefahrenstellen handeln.

Wenn ein Objekt eine Gefahr für das Fahrzeug darstellt, klassifiziert die Analyseeinheit 4 dieses Objekt als kritisches Objekt. Ihm wird in diesem Fall auch ein bestimmter Gefahrwert zugeordnet. Der Gefahrwert richtet sich dabei danach, wie wahrscheinlich ein Ereignis ist, welches vermieden werden soll. Ferner hängt der Gefahrwert von der Art des Ereignisses und dem Zeitintervall bis zum voraussichtlichen Eintritt dieses Ereignisses ab. Die Klassifizierung von Objekten im Fahrzeugumfeld im Hinblick auf eine Gefahr für ein Fahrzeug ist bei herkömmlichen Fahrerassistenzsystemen an sich bekannt.

Die Analyseeinheit 4 kann außerdem prüfen, ob sich ein kritisches Objekt im Blickfeld 11 des Fahrers oder außerhalb des Blickfelds 11 des Fahrer befindet. Hierfür vergleicht sie die Position des kritischen Objekts relativ zu dem Fahrzeug, genauer zu den Augen des Fahrers, mit dem von der Blickrichtungserfassungseinheit 3 bestimmten aktuellen Blickfeld 11 des Fahrers. Die Position des kritischen Objekts kann dabei eine Fläche umfassen, deren Normale in Richtung der Augen des Fahrers zeigt.

Die Analyseeinheit 4 ist mit einem Speicher 5 gekoppelt. An diesen Speicher 5 überträgt die Analyseeinheit 4 fortwährend die aktuelle Position der kritischen Objekte sowie die jeweils zugeordneten Gefahrwerte dieser Objekte. Des Weiteren überträgt die Analyseeinheit 4 fortwährend aktualisiert an den Speicher 5, ob sich die jeweiligen kritischen Objekt im Blickfeld des Fahrers oder außerhalb dieses Blickfelds befinden.

Die Analyseeinheit 4 ist ferner mit einer Steuervorrichtung 6 verbunden, welche auch auf die in dem Speicher 5 gespeicherten Daten zugreifen kann. Die Steuervorrichtung 6 ist eingerichtet, in Abhängigkeit von einem Gefahrwert und von Auslöseschwellwerten Eingriffe in die Bewegung des Fahrzeugs automatisch vorzubereiten und auszuführen. Ferner kann die Steuervorrichtung 6 in Abhängigkeit von dem Gefahrwert und Auslöseschwellwerten verschiedene Warnungen ausgeben. Hierfür ist die Steuervorrichtung 6 mit einer Ausgabeeinheit 7 verbunden, welche eine Anzeigeeinheit und Lautsprecher umfasst, um Warnungen visuell und/oder akustisch auszugeben.

Um Eingriffe in die Bewegung des Fahrzeugs vorzubereiten bzw. auszuführen, ist die Steuervorrichtung 6 über einen Datenbus 8 des Fahrzeugs mit verschiedenen Steuergeräten 9 gekoppelt, welche verschiedene Eingriffe in die Bewegung des Fahrzeugs ausführen können. Beispielsweise kann durch die Steuergeräte 9 das Fahrzeug positiv oder negativ beschleunigt werden oder es kann die Bewegungsrichtung des Fahrzeugs verändert werden. Ferner können über die Steuergeräte 9 verschiedene Sicherheitseinrichtungen angesteuert werden, wie beispielsweise Airbags oder die Lichtsignalanlage des Fahrzeugs.

Für die Eingriffe in die Bewegung des Fahrzeugs sind Eingriffsstufen definiert, die stärker werdende Eingriffe in die Bewegung des Fahrzeugs erzeugen. Die Eingriffsstufen definieren zunächst schwache bzw. sanfte Reaktionen des Fahrerassistenzsystems 1 auf eine Fahrsituation, wie ein leichtes Abbremsen des Fahrzeugs oder geringe Lenkbewegungen des Fahrzeugs. Bei höheren Eingriffsstufen wird stärker in die Bewegung des Fahrzeugs eingegriffen. Beispielsweise wird das Fahrzeug in diesem Fall stärker abgebremst, oder es werden Lenkbewegungen automatisch ausgeführt, die ein Ausweichmanöver ausführen. Beim Eingriff der höchsten Eingriffsstufe wird eine Notfallbremsung ausgeführt, um eine Kollision mit einem kritischen Objekt zu vermeiden oder zumindest die Verletzungsgefahr bei einer solchen Kollision zu verringern.

Gleichermaßen können eine Vielzahl von Warnungen verschiedener Warnstufen definiert sein, die stärker werdende Warnungen für den Fahrer des Fahrzeugs definieren. Warnungen einer niedrigeren Warnstufe können Hinweise im Kombiinstrument des Fahrzeugs sein, Warnungen höherer Warnstufen können akustische Ausgaben hoher Frequenz sein.

In der Steuervorrichtung 6 ist jedem Eingriff und jeder Warnung einer bestimmten Eingriffsstufe oder einer bestimmten Warnstufe ein bestimmter Auslöseschwellwert zugeordnet. Wie später erläutert wird, können diese Auslöseschwellwerte jedoch zumindest zum Teil von der Analyseeinheit 4 verändert werden. Im Folgenden wir davon ausgegangen, dass von denjenigen Auslöseschwellwerten als Standart- Auslöseschwellwerten ausgegangen wird, die für eine Fahrsituation definiert sind, bei der sich ein kritisches Objekt im Blickfeld 11 des Fahrers befindet.

Im Folgenden wird das erfindungsgemäße Verfahren sowie weitere Ausgestaltungen der Einrichtungen des erfindungsgemäßen Fahrerassistenzsystems 1 mit Bezug zu den Figuren 2 bis 4 erläutert:

Fig. 2 zeigt einen von der Kamera der Blickrichtungserfassungseinheit 3 erfassten Fahrer des Fahrzeugs. Die Auswertung der Kamerabilder ergibt die Blickrichtung 10 und ein Blickfeld 11.

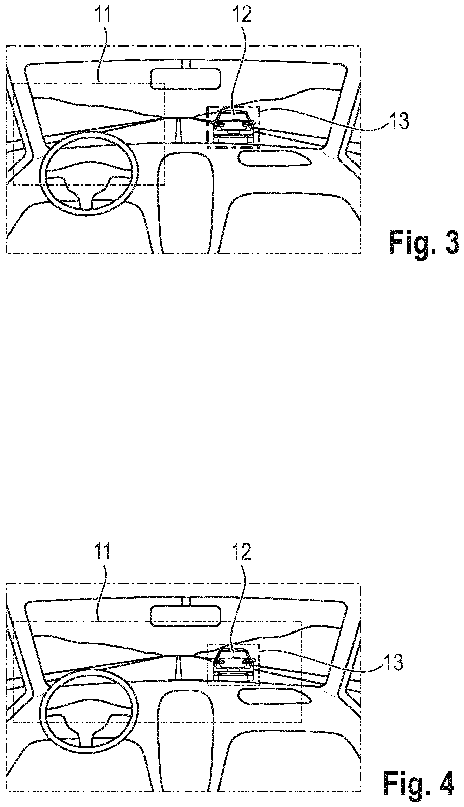

In den Figuren 3 und 4 ist eine beispielhafte Fahrsituation gezeigt. Von der Umfelderfassungseinheit 2 wird ein Objekt 12, nämlich ein anderes Fahrzeug, auf der rechten Fahrspur detektiert. Die Position 13 des Objekts 12 ist in diesem Fall eine bestimmte Fläche, welche das Objekt 12 zeigt, wenn man es aus der Position des Fahrers des Fahrzeugs betrachtet. In Fig. 3 ist die Situation gezeigt, bei der sich das Objekt 12 außerhalb des Blickfelds 11 des Fahrers befindet. Der Fahrer blickt zu weit nach links aus dem Fahrzeug, um das Objekt 12 wahrnehmen zu können. In Fig. 4 ist die Situation gezeigt, bei welcher das Objekt 12 im Blickfeld 11 des Fahrers liegt.

Im Folgenden wird erläutert, wie das Fahrerassistenzsystem 1 bei dem erfindungsgemäßen Verfahren bei der Fahrsituation der Fig. 3 betrieben wird:
Zunächst sind die Auslöseschwellwerte für die verschiedenen möglichen Eingriffe und Warnungen des Fahrerassistenzsystems 1 als Standardwerte gesetzt. Diese Standardwerte entsprechen Auslöseschwellwerten für eine Fahrsituation, wie sie in Fig. 4 gezeigt ist, d. h. bei welcher sich ein Objekt 12 im Blickfeld 11 des Fahrers befindet.

Bei dem Verfahren wird nun das Fahrzeugumfeld fortwährend von der Umfelderfassungseinheit 2 erfasst. Dabei werden Objekte 12 im Fahrzeugumfeld identifiziert, welche für Eingriffe und Warnungen des Fahrerassistenzsystems 1 relevant sind. Für solche Objekte 12 wird die Position relativ zu der Position des Fahrzeugs bestimmt, d. h. es wird die relative Lage des Objekts zum Fahrzeug und der Abstand des Objekts 12 zum Fahrzeug bestimmt.

Nun wird von der Analyseeinheit 4 geprüft, ob das Objekt 12 eine Gefahr für das Fahrzeug darstellt. Bei der Fahrsituation, wie sie in Fig. 3 dargestellt ist, stellt das Objekt 12 eine Gefahr für das Fahrzeug dar, da eine Kollision mit diesem Objekt 12 möglich ist, wenn es beispielsweise abbremst oder sich seine Lage relativ zu dem Fahrzeug verändert. Das Objekt 12 wird daher von der Analyseeinheit 4 als kritisches Objekt klassifiziert. Ferner wird dem Objekt 12 ein Gefahrwert zugeordnet. Dieser Gefahrwert hängt beispielsweise von der Relativgeschwindigkeit des eigenen Fahrzeugs zu dem Objekt 12 und dem Abstand des Objekts 12 von dem Fahrzeug ab. Ferner wird bei der Bestimmung des Gefahrwerts die voraussichtliche Trajektorie des Fahrzeugs sowie die voraussichtliche Trajektorie des Objekts 12 berücksichtigt. Die Position des Objekts 12 und der zugeordnete Gefahrwert für das Objekt 12 werden von der Analyseeinheit 4 in dem Speicher 5 gespeichert. Die gespeicherten Werte werden von der Analyseeinheit 5 fortwährend aktualisiert.

Gleichzeitig wird mittels der Blickrichtungserfassungseinheit 3 fortwährend die Blickrichtung 10 des Fahrers des Fahrzeugs erfasst und daraus ein Blickfeld 11 bestimmt. Die Analyseeinheit 4 prüft anhand der Position des als kritisch klassifizierten Objekts 12, ob sich dieses innerhalb des Blickfelds 11 oder außerhalb dieses Blickfelds 11 befindet. Auch diese Information wird zugeordnet zu dem Objekt 12 in dem Speicher 5 gespeichert und von der Analyseeinheit 4 fortwährend aktualisiert.

Des Weiteren kann die Analyseeinheit 4 die Auslöseschwellwerte für Eingriffe und Warnungen des Fahrerassistenzsystems 1, welche von der Steuervorrichtung 6 vorbereitet und erzeugt werden, verändern. Wenn sich ein kritisches Objekt 12, wie in Fig. 3 gezeigt, außerhalb des Blickfelds 11 des Fahrers befindet, werden die Auslöseschwellwerte für zumindest einen Teil der Eingriffe und Warnungen gesenkt. Dies bedeutet, dass der zugeordnete Eingriff bzw. die zugeordnete Warnung bereits bei einem geringeren Gefahrwert vorbereitet, erzeugt oder ausgegeben wird. Dabei wird jedoch der Auslöseschwellwert für einen Eingriff einer niedrigeren Eingriffsstufe stärker gesenkt als für den Eingriff einer höheren Eingriffsstufe.

Bei dem in Fig. 3 gezeigten Beispiel wird der Auslöseschwellwert für eine Warnung zu einem kritischen Objekt 12 abgesenkt. Gleichermaßen wird der Auslöseschwellwert für die Vorbereitung eines Eingriffs einer niedrigen Eingriffsstufe durch das Fahrerassistenzsystem 1 abgesenkt. Ferner wird der Auslöseschwellwert für einen Eingriff einer etwas höheren Eingriffsstufe, bei der das Fahrzeug eine geringe Lenkbewegung ausführt, gesenkt, allerdings in einem geringeren Maße als die Absenkung des Auslöseschwellwerts für die Ausgabe der Warnung und die Vorbereitung des Eingriffs der niedrigen Eingriffsstufe durch das Fahrerassistenzsystem 1. Der Auslöseschwellwert, der einen Eingriff der höchsten Eingriffsstufe, nämlich für eine Notfallbremsung des Fahrzeugs, betrifft, wird unverändert gelassen.

Bei der Veränderung des Auslöseschwellwert wird auch berücksichtigt, wie der Winkel zwischen der Blickrichtung des Fahrers und einem Strahl von den Augen des Fahrers, beispielsweise dem Mittelpunkt zwischen den beiden Augen des Fahrers, zu dem Objekt 11 ist. Je größer dieser Winkel ist, umso stärker wird der Auslöseschwellwert abgesenkt.

Befindet sich bei der in Fig. 3 gezeigten Fahrsituation das Objekt 12 noch relativ weit entfernt von dem Fahrzeug, ergibt sich für das Objekt 12 ein geringer Gefahrwert. Bereits dieser Gefahrwert übersteigt jedoch den abgesenkten Auslöseschwellwert für die Ausgabe einer Warnung und die Vorbereitung des Eingriffs der niedrigen Eingriffsstufe durch das Fahrerassistenzsystem 1, so dass die Steuervorrichtung 6 über eine Anzeigeeinheit der Ausgabeeinheit 7 eine Warnung visuell ausgibt. Gleichzeitig werden bestimmte Steuergeräte 9 in einen Zustand versetzt, in dem sie für einen Eingriff in die Bewegung des Fahrzeugs vorbereitet sind.

Verändert sich nun der Abstand zwischen dem Fahrzeug und dem Objekt 12, erhöht sich der von der Analyseeinheit 4 bestimmte Gefahrwert für das Objekt 12, so dass der etwas weniger abgesenkte Auslöseschwellwert für eine akustische Warnung des Fahrers und für einen Eingriff der mittleren Eingriffsstufe überschritten wird. Entsprechend wird von der Steuervorrichtung 6 veranlasst, dass über Lautsprecher der Ausgabeeinheit 7 ein Warnton ausgegeben wird. Ferner wird mittels der Steuergeräte 9 die Lenkung des Fahrzeugs so beeinflusst, dass leichte Lenkbewegungen ausgeführt werden, welche den Fahrer haptisch darauf aufmerksam machen, dass sich ein kritisches Objekt 12 im Fahrzeugumfeld befindet.

Ein Eingriff der Fahrerassistenzsystems 1 der höchsten Eingriffsstufe, wie beispielsweise eine Notfallbremsung, soll nur in Ausnahmefällen durchgeführt werden. Der Auslöseschwellwert für einen solchen Eingriff wird daher auch dann nicht verändert, wenn sich das kritische Objekt 12, das die Ursache für einen solchen Eingriff ist, außerhalb des Blickfelds 11 des Fahrers befindet. Eine Notfallbremsung wird somit in jedem Fall erst zum letztmöglichen Zeitpunkt ausgeführt, um eine Kollision mit dem Objekt 12 zu vermeiden.

Mit Bezug zu Fig. 4 wird die Situation erläutert, bei der sich das als kritisch klassifizierte Objekt 12 innerhalb des Blickfelds 11 des Fahrers befindet. In diesem Fall verbleiben die Auslöseschwellwerte des Fahrerassistenzsystems 1 bei den Standardwerten. Sie sind somit insbesondere größer oder gleich den Auslöseschwellwerten im Vergleich zu der in Fig. 3 dargestellten Fahrsituation, bei der sich das Objekt 12 außerhalb des Blickfelds 11 des Fahrers befindet.

Des Weiteren sind für einige Warnungen und Eingriffe die Auslöseschwellwerte so eingestellt, dass die zugeordneten Warnungen und Eingriffe nicht durchgeführt werden, wenn sich das Objekt 12 im Blickfeld 11 des Fahrzeugs befindet. Solche Warnungen und Eingriffe werden somit nur in der Fahrsituation ausgegeben bzw. erzeugt, wenn sich das Objekt 12 außerhalb des Blickfelds 11 des Fahrzeugs befindet. Auf diese Weise werden weniger Warnungen und Eingriffe erzeugt bzw. ausgegeben, wenn sich das Objekt 12 im Blickfeld 11 des Fahrers befindet im Vergleich zu der Situation, wenn sich dieses Objekt 12 nicht im Blickfeld 11 befindet.

Bei dem Verfahren wird das Fahrerassistenzsystem 1 somit so adaptiert, dass der Fahrer einerseits beim Führen des Fahrzeugs von dem Fahrerassistenzsystem 1 unterstützt wird, andererseits jedoch nicht Warnungen ausgegeben bzw. Eingriffe erzeugt werden, die dann unnötig sind, wenn sich ein kritisches Objekt 12 im Blickfeld 11 des Fahrers befindet. In diesem Fall geht das Fahrerassistenzsystem nämlich davon aus, dass der Fahrer alle kritischen Objekte 11 im Blick hat und daher die Gefahrsituation beherrscht und selbst eingreift. Das Fahrerassistenzsystem reagiert in diesem Fall insbesondere nur in einem Notfall oder Risikofall, um einen Unfall oder eine Kollision zu vermeiden. Sollte der Fahrer hingegen nicht alle kritischen Objekte 12 im Blick haben, so reagiert das Fahrerassistenzsystem 1 mit einer Warnung oder einem möglichst komfortablen Eingriff, um den Fahrer auf diese Fahrsituation hinzuweisen und eine Gefahrensituation zu lösen. Der Eingriff erfolgt in diesem Fall im Vergleich zu einer Notsituation oder einem Risikofall zeitlich deutlich früher und ggf. sanfter, so dass der Komfort für den Fahrer erhöht wird. Das Verfahren geht in diesem Fall nämlich davon aus, dass der Fahrer nicht rechtzeitig oder gar nicht auf das kritische Objekt 12 reagiert. Es wird in diesem Fall möglichst früh und möglichst komfortabel darauf hingewirkt, die Gefahr zu eliminieren.

### Bezugszeichenliste

- 1: Fahrerassistenzsystem
- 2: Umfelderfassungseinheit
- 3: Blickrichtungserfassungseinheit
- 4: Analyseeinheit
- 5: Speicher
- 6: Steuervorrichtung
- 7: Ausgabeeinheit
- 8: Datenbus
- 9: Steuergeräte
- 10: Blickrichtung
- 11: Blickfeld
- 12: Objekt
- 13: Position des Objekts

## Patentansprüche

1. Verfahren zum Betrieb eines Fahrerassistenzsystems (1) eines Fahrzeugs, wobei das Fahrerassistenzsystem (1) eingerichtet ist, in Abhängigkeit von einem Gefahrwert und von Auslöseschwellwerten, Eingriffe in die Bewegung des Fahrzeugs automatisch vorzubereiten oder auszuführen, wobei zumindest zwei Eingriffsstufen definiert sind, die stärker werdende Eingriffe in die Bewegung des Fahrzeugs vorbereiten oder erzeugen, wobei jeder Eingriffsstufe jeweils ein Auslöseschwellwert zugeordnet wird, wobei bei dem Verfahren
das Fahrzeugumfeld erfasst wird,
die Position zumindest eines Objekts (12) im erfassten Fahrzeugumfeld relativ zu der Position des Fahrzeugs bestimmt wird,
geprüft wird, ob das Objekt (12) eine Gefahr für das Fahrzeug darstellt, und, wenn das Objekt (12) eine Gefahr für das Fahrzeug darstellt, dieses Objekt (12) als kritisches Objekt (12) klassifiziert wird und ihm ein bestimmter Gefahrwert zugeordnet wird,
eine Blickrichtung (10) eines Fahrers des Fahrzeugs erfasst und daraus ein Blickfeld (11) bestimmt wird und
anhand der Position eines kritischen Objekts (12) geprüft wird, ob sich dieses kritische Objekt (12) außerhalb des Blickfelds (11) des Fahrers befindet,
**dadurch gekennzeichnet, dass**,
wenn sich das kritische Objekt (12) außerhalb des Blickfelds (11) des Fahrers befindet, relativ zu den Auslöseschwellwerten, bei denen sich das kritische Objekt (12) im Blickfeld (11) des Fahrers befindet, der Auslöseschwellwert für den Eingriff der niedrigeren Eingriffsstufe stärker gesenkt wird als für den Eingriff der höheren Eingriffsstufe.

2. Verfahren nach Anspruch 1,
**dadurch gekennzeichnet, dass**
der Eingriff der niedrigeren Eingriffsstufe eine geringe Bewegungsänderung des Fahrzeugs bewirkt als der Eingriff der höheren Eingriffsstufe.

3. Verfahren nach Anspruch 1 oder 2,
**dadurch gekennzeichnet, dass**,
wenn sich das kritische Objekt (12) außerhalb des Blickfelds (11) des Fahrers befindet, der Auslöseschwellwert für den Eingriff der höheren Eingriffsstufe unverändert bleibt.

4. Verfahren nach einem der vorhergehenden Ansprüche,
**dadurch gekennzeichnet, dass**
der Eingriff der höheren Eingriffsstufe eine Notfallbremsung ist.

5. Verfahren nach einem der vorhergehenden Ansprüche,
**dadurch gekennzeichnet, dass**
das Fahrerassistenzsystem (1) eingerichtet ist, in Abhängigkeit von dem Gefahrwert und den Auslöseschwellwerten, zumindest eine Warnung auszugeben, der ein Auslöseschwellwert zugeordnet wird,
wenn sich das kritisches Objekt (12) außerhalb des Blickfelds (11) des Fahrers befindet, relativ zu dem Auslöseschwellwert, bei dem sich das kritische Objekt (12) im Blickfeld (11) des Fahrers befindet, der Auslöseschwellwert für die zumindest eine Warnung gesenkt wird, so dass die zumindest eine Warnung bei einem niedrigeren Gefahrwert ausgegeben wird.

6. Verfahren nach Anspruch 5,
**dadurch gekennzeichnet, dass**
das Fahrerassistenzsystem (1) eingerichtet ist, zumindest eine Warnung nur dann auszugeben, wenn sich das kritisches Objekt (12) außerhalb des Blickfelds (11) des Fahrers befindet.

7. Verfahren nach einem der vorhergehenden Ansprüche,
**dadurch gekennzeichnet, dass**
die Gefahr für das Fahrzeug eine Gefahr für den Eintritt eines in der Zukunft liegenden Ereignisses ist und der Gefahrwert umso höher ist desto kürzer das Zeitintervall bis zum Eintritt dieses Ereignisses ist.

8. Verfahren nach einem der vorhergehenden Ansprüche,
**dadurch gekennzeichnet, dass**
der Auslöseschwellwert für den Eingriff der niedrigeren Eingriffsstufe so gewählt ist, dass dieser Eingriff nicht durchgeführt wird, wenn sich das kritische Objekt (12) im Blickfeld (11) des Fahrers befindet.

9. Verfahren nach einem der vorhergehenden Ansprüche,
**dadurch gekennzeichnet, dass**
der Winkel zwischen der Blickrichtung (10) des Fahrers und einem Strahl von den Augen des Fahrers zu dem kritischen Objekts (12) bestimmt wird und der Auslöseschwellwert umso stärker abgesenkt wird desto größer dieser Winkel ist.

10. Fahrerassistenzsystem (1) für ein Fahrzeug mit
einer Umfelderfassungseinheit (2) zum Erfassen des Fahrzeugumfelds,
eine Blickrichtungserfassungseinheit (3) zum Erfassen der Blickrichtung (10) eines Fahrers der Fahrzeugs und zum Bestimmen eines Blickfelds (11),
einer mit der Umfelderfassungseinheit (2) und der Blickrichtungserfassungseinheit (3) gekoppelte Analyseeinheit (4), die eingerichtet ist,
die Position zumindest eines Objekts im erfassten Fahrzeugumfeld relativ zu der Position des Fahrzeugs zu bestimmen,
zu prüfen, ob das Objekt (12) eine Gefahr für das Fahrzeug darstellt, und, wenn das Objekt (12) eine Gefahr für das Fahrzeug darstellt, dieses Objekt (12) als kritisches Objekt (12) zu klassifizieren und ihm einen bestimmten Gefahrwert zuzuordnen, und
anhand der Position eines kritischen Objekts (12) zu prüfen, ob sich dieses kritische Objekt (12) außerhalb des Blickfelds (11) des Fahrers befindet, und
einer Steuervorrichtung (6), die eingerichtet ist, in Abhängigkeit von dem Gefahrwert und von Auslöseschwellwerten, Eingriffe in die Bewegung des Fahrzeugs automatisch vorzubereiten oder auszuführen, wobei zumindest zwei Eingriffsstufen definiert sind, die stärker werdende Eingriffe in die Bewegung des Fahrzeugs vorbereiten oder erzeugen, wobei jeder Eingriffsstufe jeweils ein Auslöseschwellwert zugeordnet ist,
**dadurch gekennzeichnet, dass**
die Analyseeinheit (4) eingerichtet ist, wenn sich das kritische Objekt (12) außerhalb des Blickfelds (11) des Fahrers befindet, relativ zu Auslöseschwellwerten, bei denen sich das kritische Objekt im Blickfeld (11) des Fahrers befindet, den Auslöseschwellwert für den Eingriff der niedrigeren Eingriffsstufe stärker zu senken als für den Eingriff der höheren Eingriffsstufe.

## Claims

1. Method for operating a driver assistance system (1) of a vehicle, wherein the driver assistance system (1) is configured to automatically prepare for or carry out interventions in the movement of the vehicle on the basis of a risk value and triggering threshold values, wherein at least two intervention levels are defined which prepare for or produce ever greater interventions in the movement of the vehicle, wherein a triggering threshold value is respectively assigned to each intervention level, wherein, in the method,
the vehicle environment is captured,
the position of at least one object (12) in the captured vehicle environment relative to the position of the vehicle is determined,
a check is carried out in order to determine whether the object (12) is a risk to the vehicle and, if the object (12) is a risk to the vehicle, this object (12) is classified as a critical object (12) and is assigned a specific risk value,
a viewing direction (10) of a driver of the vehicle is captured and is used to determine a field of view (11), and
the position of a critical object (12) is taken as a basis for checking whether this critical object (12) is outside the field of view (11) of the driver, **characterized in that**
if the critical object (12) is outside the field of view (11) of the driver, relative to the triggering threshold values for which the critical object (12) is in the field of view (11) of the driver, the triggering threshold value for the intervention of the lower intervention level is reduced to a greater extent than for the intervention of the higher intervention level.

2. Method according to Claim 1,
**characterized in that**
the intervention of the lower intervention level gives rise to a smaller movement change of the vehicle than the intervention of the higher intervention level.

3. Method according to Claim 1 or 2,
**characterized in that**
if the critical object (12) is outside the field of view (11) of the driver, the triggering threshold value for the intervention of the higher intervention level remains unchanged.

4. Method according to one of the preceding claims,
**characterized in that**
the intervention of the higher intervention level is emergency braking.

5. Method according to one of the preceding claims,
**characterized in that**
the driver assistance system (1) is configured to output at least one warning on the basis of the risk value and the triggering threshold values, which warning is assigned a triggering threshold value,
if the critical object (12) is outside the field of view (11) of the driver, relative to the triggering threshold value for which the critical object (12) is in the field of view (11) of the driver, the triggering threshold value for the at least one warning is reduced such that the at least one warning is output in the case of a lower risk value.

6. Method according to Claim 5,
**characterized in that**
the driver assistance system (1) is configured to output at least one warning only when the critical object (12) is outside the field of view (11) of the driver.

7. Method according to one of the preceding claims,
**characterized in that**
the risk to the vehicle is a risk of a future event occurring, and the risk value is higher, the shorter the interval of time before this event occurs.

8. Method according to one of the preceding claims,
**characterized in that**
the triggering threshold value for the intervention of the lower intervention level is selected such that this intervention is not carried out if the critical object (12) is in the field of view (11) of the driver.

9. Method according to one of the preceding claims,
**characterized in that**
the angle between the viewing direction (10) of the driver and a beam from the driver's eyes to the critical object (12) is determined, and the triggering threshold value is reduced to a greater extent, the greater this angle.

10. Driver assistance system (1) for a vehicle, having
an environment capture unit (2) for capturing the vehicle environment,
a viewing direction capture unit (3) for capturing the viewing direction (10) of a driver of the vehicle and for determining a field of view (11),
an analysis unit (4) which is coupled to the environment capture unit (2) and to the viewing direction capture unit (3) and is configured
to determine the position of at least one object in the captured vehicle environment relative to the position of the vehicle,
to check whether the object (12) is a risk to the vehicle and, if the object (12) is a risk to the vehicle, to classify this object (12) as a critical object (12) and to assign it a specific risk value, and
to take the position of a critical object (12) as a basis for checking whether this critical object (12) is outside the field of view (11) of the driver, and
a control apparatus (6) which is configured to automatically prepare for or carry out interventions in the movement of the vehicle on the basis of the risk value and triggering threshold values, wherein at least two intervention levels are defined which prepare for or produce increasingly greater interventions in the movement of the vehicle, wherein a triggering threshold value is respectively assigned to each intervention level,
**characterized in that**
the analysis unit (4) is configured, if the critical object (12) is outside the field of view (11) of the driver, relative to triggering threshold values for which the critical object is in the field of view (11) of the driver, to reduce the triggering threshold value for the intervention of the lower intervention level to a greater extent than for the intervention of the higher intervention level.

## Revendications

1. Procédé de fonctionnement d'un système d'aide à la conduite (1) d'un véhicule, le système d'aide à la conduite (1) étant conçu pour préparer ou effectuer automatiquement des interventions dans le mouvement du véhicule en fonction d'une valeur de risque et de valeurs seuils de déclenchement, au moins deux niveaux d'intervention étant définis qui préparent ou génèrent des interventions croissantes dans le mouvement du véhicule, une valeur seuil de déclenchement étant associée à chaque niveau d'intervention,
dans le procédé
l'environnement du véhicule étant détecté,
la position d'au moins un objet (12) dans l'environnement de véhicule détecté étant déterminée par rapport à la position du véhicule,
une vérification étant effectuée pour savoir si l'objet (12) présente un risque pour le véhicule et, si l'objet (12) présente effectivement un risque pour le véhicule, cet objet (12) étant classé comme objet critique (12) et une valeur de risque déterminée lui étant associée,
une direction de vision (10) d'un conducteur du véhicule étant détectée et un champ de vision (11) étant déterminé à partir de celle-ci et
une vérification étant effectuée sur la base de la position d'un objet critique (12) pour savoir si cet objet critique (12) se trouve en dehors du champ de vision (11) du conducteur,
**caractérisé en ce que**
si l'objet critique (12) se trouve en dehors du champ de vision du conducteur (11), en ce qui concerne les valeurs seuils de déclenchement pour lesquelles l'objet critique (12) se trouve dans le champ de vision du conducteur (11), la valeur seuil de déclenchement concernant l'intervention du niveau d'intervention inférieur est abaissée plus fortement que pour celle concernant l'intervention du niveau d'intervention supérieur.

2. Procédé selon la revendication 1,
**caractérisé en ce que**
l'intervention du niveau d'intervention inférieur provoque une moindre modification du mouvement du véhicule que l'intervention du niveau d'intervention supérieur.

3. Procédé selon la revendication 1 ou 2,
**caractérisé en ce que**,
si l'objet critique (12) se trouve en dehors du champ de vision (11) du conducteur, la valeur seuil de déclenchement concernant l'intervention du niveau d'intervention supérieur reste inchangée.

4. Procédé selon l'une des revendications précédentes,
**caractérisé en ce que**
l'intervention du niveau d'intervention supérieur est un freinage d'urgence.

5. Procédé selon l'une des revendications précédentes,
**caractérisé en ce que**
le système d'aide à la conduite (1) est conçu pour délivrer au moins une alerte, à laquelle est associée une valeur seuil de déclenchement, en fonction de la valeur de risque et des valeurs seuils de déclenchement,
si l'objet critique (12) se trouve en dehors du champ de vision du conducteur (11), en ce qui concerne la valeur seuil de déclenchement pour laquelle l'objet critique (12) se trouve dans le champ de vision du conducteur (11), la valeur seuil de déclenchement concernant l'au moins une alerte est abaissée de sorte que l'au moins une alerte soit délivrée pour une valeur de risque plus faible.

6. Procédé selon la revendication 5,
**caractérisé en ce que**
le système d'aide à la conduite (1) est conçu pour délivrer au moins une alerte uniquement lorsque l'objet critique (12) se trouve en dehors du champ de vision (11) du conducteur.

7. Procédé selon l'une des revendications précédentes,
**caractérisé en ce que**
le risque pour le véhicule est un risque de survenance d'un événement futur et la valeur du risque est d'autant plus élevée que l'intervalle de temps jusqu'à la survenance de cet événement est court.

8. Procédé selon l'une des revendications précédentes,
**caractérisé en ce que**
la valeur seuil de déclenchement de l'intervention du niveau d'intervention inférieur est choisie de manière à ce que cette intervention ne soit pas effectuée si l'objet critique (12) se trouve dans le champ de vision (11) du conducteur.

9. Procédé selon l'une des revendications précédentes,
**caractérisé en ce que**
l'angle formé entre la direction de vision (10) du conducteur et une ligne droite allant des yeux du conducteur à l'objet critique (12) est déterminé et la valeur seuil de déclenchement est abaissée d'autant plus fortement que cet angle est grand.

10. Système d'aide à la conduite (1) destiné à un véhicule, ledit système comprenant
une unité de détection d'environnement (2) destinée à détecter l'environnement du véhicule,
une unité de détection de direction de vision (3) destinée à détecter la direction de vision (10) d'un conducteur du véhicule et à déterminer un champ de vision (11),
une unité d'analyse (4) qui est couplée à l'unité de détection d'environnement (2) et à l'unité de détection de direction de vision (3) et qui est conçue pour
déterminer la position d'au moins un objet dans l'environnement de véhicule détecté par rapport à la position du véhicule,
vérifier si l'objet (12) présente un risque pour le véhicule et, si l'objet (12) présente effectivement un risque pour le véhicule, classer cet objet (12) comme objet critique (12) et associer à celui-ci une valeur de risque spécifique, et
vérifier sur la base de la position d'un objet critique (12) si cet objet critique (12) se trouve en dehors du champ de vision (11) du conducteur, et
un dispositif de commande (6) qui est conçu pour préparer ou effectuer automatiquement des interventions dans le mouvement du véhicule en fonction de la valeur de risque et de valeurs seuils de déclenchement, au moins deux niveaux d'intervention étant définis qui préparent ou génèrent des interventions croissantes dans le mouvement du véhicule, une valeur seuil de déclenchement étant associée à chaque niveau d'intervention,
**caractérisé en ce que**
si l'objet critique (12) se trouve en dehors du champ de vision du conducteur (11), en ce qui concerne des valeurs seuils de déclenchement pour lesquelles l'objet critique se trouve dans le champ de vision (11) du conducteur, l'unité d'analyse (4) est conçue pour abaisser plus fortement la valeur seuil de déclenchement concernant l'intervention du niveau d'intervention inférieur que celle concernant l'intervention du niveau d'intervention supérieur.
